(19) Europäisches Patentamt
European Patent Office
Office européen des brevets

(11) Veröffentlichungsnummer: **0 550 454 B1**

# (12) EUROPÄISCHE PATENTSCHRIFT

(45) Veröffentlichungstag der Patentschrift: **25.01.95**

(51) Int. Cl.[6]: **B01D 53/14**, B01D 53/34, C10K 1/14

(21) Anmeldenummer: **91914764.5**

(22) Anmeldetag: **26.08.91**

(86) Internationale Anmeldenummer:
**PCT/EP91/01622**

(87) Internationale Veröffentlichungsnummer:
**WO 92/04102 (19.03.92 92/07)**

## (54) VERFAHREN ZUR SELEKTIVEN ENTFERNUNG ANORGANISCHER UND/ODER ORGANISCHER SCHWEFELVERBINDUNGEN.

(30) Priorität: **29.08.90 DE 4027239**

(43) Veröffentlichungstag der Anmeldung:
**14.07.93 Patentblatt 93/28**

(45) Bekanntmachung des Hinweises auf die Patenterteilung:
**25.01.95 Patentblatt 95/04**

(84) Benannte Vertragsstaaten:
**BE DE ES FR GB IT NL SE**

(56) Entgegenhaltungen:
**FR-A- 2 374 071**
**FR-A- 2 545 378**

(73) Patentinhaber: **Linde Aktiengesellschaft**
**Abraham-Lincoln-Strasse 21**
**D-65189 Wiesbaden (DE)**

(72) Erfinder: **LANDECK, Heiner**
**Drachenseestrasse 17**
**D-8000 München 70 (DE)**
Erfinder: **RANKE, Gerhard**
**Feichtetstrasse 6**
**D-8134 Pöcking (DE)**

(74) Vertreter: **Schaefer, Gerhard, Dr.**
**Linde Aktiengesellschaft**
**Zentrale Patentabteilung**
**D-82049 Höllriegelskreuth (DE)**

EP 0 550 454 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur selektiven Entfernung anorganischer und/oder organischer Schwefelverbindungen, wie $H_2S$ COS, $CS_2$, Mercaptanen und dergleichen, aus Gasen, die wenigstens eine weitere der Komponenten $H_2$, $N_2$, Ar, $CO_2$, CO und aliphatische Kohlenwasserstoffe enthalten, durch Wäsche mit einem physikalisch wirkenden Waschmittel.

Für die selektive Entschwefelung von Gasen, die neben $H_2S$ weitere anorganische und organische Schwefelverbindungen, wie beispielsweise COS, $CS_2$, Mercaptane etc., enthalten können, werden sowohl physikalische als auch chemische Waschverfahren eingesetzt.

Erläuterungen zu den unterschiedlichen Waschverfahren sind zu finden bei A.L. Kohl, F.C. Riesenfeld: "Gas Purification", 4th ed., Gulf Publishing Co., Houston/Texas (1985); S.A. Newman (Editor): "Acid and Sour Gas Treating Processes", Gulf Publishing Co., Houston/Texas (1985); sowie bei R.N. Maddox: "Gas Conditioning and Processing", Vol. IV, Campbell Petroleum Series, Norman/Oklahoma (1982).

Bei den physikalischen Wäschen werden aufgrund unterschiedlicher spezifischer physikalischer zwischenmolekularer Wechselwirkungen zwischen einzelnen funktionellen Gruppen des Waschmittels oder des Waschmittelmoleküls in seiner strukturellen Zusammensetzung als Ganzem bevorzugt einzelne Gaskomponenten aus Gasgemischen absorbiert. Das spezifische Löslichkeitsverhalten wird auch durch die unterschiedliche Anordnung gleicher funktioneller Gruppen im Waschmittelmolekül beeinflußt, da unterschiedliche Nachbarschaften der funktionellen Gruppen eine unterschiedliche Elektronenkonfiguration bedingen. In diesen Prozessen werden die wichtigsten Verfahrensschritte, d.h. die Absorption der auszuwaschenden Stoffe und die Regenerierung des Waschmittels, durch das spezifische physikalische Löslichkeitsverhalten der einzelnen Gaskomponenten bestimmt.

Als physikalisch wirkende Waschmittel werden bei den bekannten Verfahren neben anderen beispielsweise Methanol, N-Methylpyrrolidon (NMP) und Polyethylenglykoldialkylether (PGE) eingesetzt.

Aus der FR-A-2 545 378 ist ein Verfahren zur Reinigung eines unerwünschte Verbindungen wie $CO_2$, $H_2S$, Carbonyl und Alkylthiole enthaltenden Gasgemisches durch Absorption mit einem physikalisch wirkenden Waschmittel bekannt, wobei als Waschmittel eine heterocyclische, gesättigte oder ungesättigte Verbindung mit zwei Stickstoffatomen im Ring eingesetzt wird. Insbesondere werden im Verfahren der FR-A-2 545 378 fünfgliedrige Heterocyclen mit zwei Stickstoffatomen als Heteroatomen, verwendet, wobei eine Nachbarstellung der Stickstoffatome explizit ausgeschlossen wird. Als Beispiele für derartige Waschmittel werden Imidazole wie N-Methylimidazol oder Dimethylimidazol genannt.

Die Sauergasentfernung mittels chemischer Wäsche beruht auf einem vollkommen anderen Prinzip. So wird dort bei der Sauergasabtrennung ausgenutzt, daß zwischen einzelnen Lösungsmittelkomponenten und den auszuwaschenden Sauergasbestandteilen spezifische chemische bzw. elektrolytische Reaktionen ablaufen. Bei diesen Prozessen sind somit neben den physikalischen, chemischen und elektrolytischen Gleichgewichten die Kinetik und die Transportvorgänge die dominierenden Größen.

Bei selektiven chemischen Wäschen werden bei den bekannten Verfahren für die selektive Entschwefelung bevorzugt tertiäre Amine, z.B. Methyldiethanolamin (MDEA), in wässrigen Lösungen verwendet, wobei üblicherweise der Wassergehalt größer als 40 Gewichtsprozent ist.

Es ist auch bekannt, die Schwefelkomponenten durch sowohl physikalisch als auch chemisch wirkende Wäschen, sog. Hybridwäschen, zu entfernen. Dieser Wäschetyp macht sich die Vorteile der chemischen wie auch der physikalischen Wäsche zunutze. So können beispielsweise durch die Anwesenheit rein physikalisch wirkender Waschmittelkomponenten auch organische Schwefelverbindungen ausgewaschen werden, was bei einer rein chemischen Wäsche nur bedingt möglich ist.

Zur Erhöhung der Selektivität zwischen $CO_2$ und $H_2S$ wird bei diesen Prozessen u.a. die Tatsache spezifisch ausgenutzt, daß in wäßrigen Lösungen die elektrolytischen und chemischen Reaktionen von $CO_2$ teilweise kinetisch gehemmt sind und wesentlich langsamer ablaufen als die von $H_2S$. Da jedoch $H_2S$ bis auf einen Restgehalt von wenigen ppm ausgewaschen werden muß, werden normalerweise 20 bis 30 Prozent des im Rohgas enthaltenen $CO_2$ mitausgewaschen.

Bei den bekannten physikalischen Waschmitteln besteht ein wesentlicher Nachteil darin, daß neben $H_2S$ und schweren flüchtigen Schwefelkomponenten (beispielsweise Mercaptane, $CS_2$ etc.) ein beträchtlicher Teil des $CO_2$ sowie höhere Kohlenwasserstoffe mitausgewaschen werden. Eine wenigstens teilweise Abtrennung dieser mitausgewaschenen Stoffe von den Schwefelkomponenten ist meistens erforderlich, um eine schwefelreiche Fraktion zu erhalten, mit der die Umwandlungsreaktionen zu elementarem Schwefel problemlos durchgeführt werden können. Dies hat in vielen Fällen eine Komplizierung des Waschprozesses und einen Anstieg der Verbrauchs- und der Investitionskosten zur Folge. Entsprechend dem Dampfdruck des Waschmittels enthält sowohl das gereinigte Produktgas als auch die Schwefelkomponentenfraktion unerwünschte Waschmittelbestandteile, die einerseits den Betriebsmittelbedarf erhöhen und andererseits

eventuell störende Verunreinigungen im Produktgas darstellen.

Die wichtigsten Nachteile bei chemischen Wäschen bestehen darin, daß die Selektivität zwischen $H_2S$ und $CO_2$ gering ist und der Energieverbrauch bei der Regenerierung des beladenen Waschmittels relativ hoch ist. Außerdem ist bei chemischen Wäschen die Beladung des Waschmittels vom chemischen Gleichgewicht abhängig. Da die chemischen Gleichgewichte nur wenig vom Druck abhängen, werden die chemischen Wäschen bevorzugt bei niedrigen Drücken eingesetzt.

Bei schwefelhaltigen, unter Druck stehenden Synthesegasen mit einem höheren $CO_2$-Gehalt, bei denen $CO_2$ im gereinigten Gas verbleiben kann oder soll und die Schwefelkomponenten bis auf wenige ppm entfernt werden sollen, ist der Einsatz physikalischer Wäschen gegenüber chemischen Wäschen wesentlich vorteilhafter.

Der vorliegenden Erfindung lag daher die Aufgabe zugrunde, für die selektive Entschwefelung von Gasen ein Waschmittel zur Verfügung zu stellen, welches einerseits eine gute Selektivität zwischen $H_2S$ und $CO_2$ aufweist und andererseits die Möglichkeit bietet, auch COS und organische Schwefelverbindungen zu entfernen, und das weiterhin einen niedrigen Dampfdruck besitzt, so daß die Wäsche nahe Umgebungstemperatur betrieben werden kann.

Die Erfindung löst diese Aufgabe, indem als Waschmittel eine Verbindung eingesetzt wird, deren Grundstruktur ausgewählt ist aus den Heterocyclen mit einer Gliederzahl n größer/gleich 5 mit zwei Heteroatomen, ausgewählt aus Stickstoff und Sauerstoff, wovon wenigstens ein Heteroatom Stickstoff ist und wobei das oder die Stickstoffatome doppelt gebunden oder einfach gebunden und organylsubstituiert sind und wobei die Heteroatome bei Ringen gerader Gliederzahl eine der Stellungen von 1,2 bis 1,n/2 und bei Ringen ungerader Gliederzahl eine der Stellungen von 1,2 bis 1,(n-1)/2 einnehmen.

Im folgenden werden die erfindungsgemäßen Grundstrukturen der Einfachheit halber als Heterocyclen bezeichnet, in denen neben Stickstoff noch Sauerstoff als Heteroatom auftreten kann.

Unter einem doppelt gebundenen Stickstoffheteroatom ist zu verstehen, daß der Stickstoff heteroaromatisch bzw. mit einer Doppelbindung und einer Einfachbindung vollständig im Ring gebunden vorliegt. Die im weiteren benutzte Nomenklatur ist dem "Lehrbuch der organischen Chemie", Beyer & Walter, 21. Auflage, S. Hirzel Verlag, Stuttgart (1988) sowie "Die systematische Nomenklatur der Organischen Chemie", D. Hellwinkel, 3. Auflage, Springer-Verlag, Berlin (1986) entnommen.

Bei den erfindungsgemäßen Waschmitteln handelt es sich um Verbindungen, deren Grundstruktur ein Heterocyclus mit fünf und mehr Ringatomen ist, wobei fünf- und sechsgliedrige Ringe bevorzugt werden. Weiterhin enthält der Heterocyclus zwei Heteroatome, die beide Stickstoff sein können oder wo neben Stickstoff noch Sauerstoff als zweites Heteroatom auftritt.

Bei den erfindungsgemäßen Grundstrukturen der Waschmittel ist jedweder Sättigungsgrad möglich. So fallen darunter die Heteroalkane, welche gesättigte, heterocyclische Verbindungen sind, wie auch die als Heteroaromaten bezeichneten maximal ungesättigten Fünf- und Sechsringe, sowie die sogenannten Heteroalkene, die vom Sättigungsgrad zwischen Heteroalkanen und Heteroaromaten einzuordnen sind.

Da es sich im erfindungsgemäßen Fall um ein physikalisches Waschverfahren handelt und damit ein physikalisch wirkendes Waschmittel zur Anwendung kommt, dürfen die einfach gebundenen Stickstoffatome im Heterocyclus keinen Wasserstoff als Liganden tragen, sondern müssen tertiäre Stickstoffatome sein. Bei den Derivaten der erfindungsgemäßen Heteroalkane müssen somit die Stickstoffheteroatome organylsubstituiert sein. Die einfach gebundenen Stickstoffatome der erfindungsgemäßen Heteroalkene sind demgemäß organylsubstituiert, während Stickstoffheteroatome, die an Doppelbindungen beteiligt sind, genau wie bei den Heteroaromaten keinen Organylrest und keinen Wasserstoff als Liganden tragen. Besitzt beispielsweise ein Heterocyclus zwei Stickstoffheteroatome, so müssen alle Wasserstoff liganden dieser Stickstoffheteroatome, für den Fall, daß es sich um ein Heteroalkan handelt, organylsubstituiert sein. Liegt der erfindungsgemäße Heterocyclus als Heteroalken vor, so können die Stickstoffe wahlweise im Ring doppelt gebunden sein oder müssen bei Einfachbindungen Organylsubstituenten tragen, wobei Mischformen auftreten können.

Bei den Derivaten der erfindungsgemäßen Heteroalkane und Heteroalkene können die Substituenten gleich oder unterschiedlich sein. So können bei den erfindungsgemäßen Heteroalkanen mit zwei Stickstoffheteroatomen maximal zwei unterschiedliche Substituenten an den Stickstoffatomen auftreten.

Um als Waschmittel zur selektiven Entschwefelung verwendbar zu sein, müssen die genannten Heterocyclen bei den Waschbedingungen chemisch und thermisch stabil sein. Da die Stabilität mit steigender Sättigung zunimmt, werden die Heteroalkane gegenüber den Heteroalkenen und diese wiederum gegenüber den Heteroaromaten bevorzugt.

Es hat sich nun überraschenderweise gezeigt, daß bei den erfindungsgemäßen Heterocyclen bestimmte Stellungen der Heteroatome die Lösungsmitteleigenschaften besonders günstig beeinflussen. So treten bei Ringen gerader Gliederzahl die Stellungen 1,2 bis 1,n/2 gegenüber anderen hervor. In Ringen ungerader Gliederzahl werden die Stellungen 1,2 bis 1,(n-1)/2 bevorzugt.

Die besonders bevorzugten fünf- und sechsgliedrigen Vertreter der erfindungsgemäßen Stickstoffheterocyclen mit zwei Stickstoffheteroatomen werden als 1,2-Diazole bzw. 1,2-Diazolidine und 1,2- oder 1,3-Diazine bzw. 1,2- oder 1,3-Diazinane bezeichnet, wobei die Anordnung der Heteroatome im Ring, wie oben beschrieben, auf bestimmte Stellungen beschränkt ist. Die fünfgliedrigen Vertreter tragen in der Literatur, entsprechend ihrer Sättigung, auch die Bezeichnungen Pyrazole bzw. Pyrazolidine. Die in der Literatur gebräuchlichen Namen für die sechsgliedrigen Ringe lauten: Pyridazine bzw. Pyridazinane sowie Pyrimidine bzw. Pyrimidinane. Jeder chemisch stabile Vertreter dieser Grundstrukturen und der damit gebildeten Derivate kann als Waschmittel für die selektive Entschwefelung eingesetzt werden.

Wird eines der Stickstoffheteroatome durch ein Sauerstoffatom ersetzt, so erhält man weitere erfindungsgemäße Grundstrukturen. Die fünf- und sechsgliedrigen Heteroalkene bzw. Heteroaromaten dieses Strukturtyps werden als Isoxazole (= 1,2-Oxazole) bzw. 1,2- oder 1,3-Oxazine bezeichnet. Analog dazu sind die Heteroalkane und deren Derivate unter den Oberbegriffen Isoxazolidine bzw. 1,2- oder 1,3-Oxazinane zusammengefaßt. Ebenso wie bei den fünf- und sechsgliedrigen Ringen mit zwei Stickstoffheteroatomen sind hier die oben spezifizierten Stellungen der Heteroatome maßgebend.

In der folgenden Tabelle I sind die wesentlichen Grundstrukturen der erfindungsgemäßen Waschmittel dargestellt.

## Tabelle I

Die nachfolgenden Grundstrukturen zeigen jeweils nur einen beispielhaften Vertreter aller möglichen konstitutions-isomeren Formen der erfindungsgemäßen fünf- und sechsgliedrigen Heterocyclen und ihrer Derivate.

1,2-Diazol (Pyrazol)

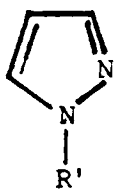

1,2-Diazolidin (Pyrazolidin)

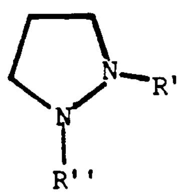

1,2-Oxazol (Isoxazol)

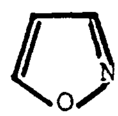

1,2-Oxazolidin (Isoxazolidin)

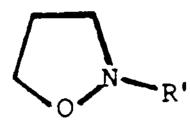

1,2-Diazin (Pyridazin)

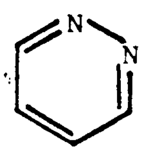

1,3-Diazinan (Pyrimidinan)

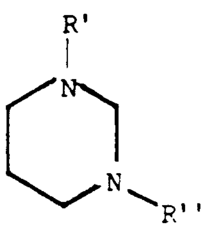

1,2-Oxazin

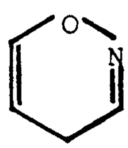

1,3-Oxazinan

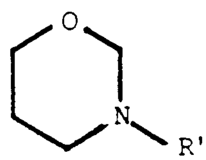

R', R'' bezeichnen Organylreste am substituierten einfachgebundenen Stickstoffheteroatom (vgl. Tabelle II)

Die vorgenannten Typen zählen zu den besonders bevorzugten Grundstrukturen der erfindungsgemäßen Waschmittel.

Wie bereits erläutert, handelt es sich bei den erfindungsgemäßen Waschmitteln um physikalisch wirkende Waschmittel, weshalb der einfach gebundene Stickstoff substituiert sein muß.

Erfindungsgemäß sind der oder die Organylsubstituenten an einem oder mehreren einfach gebundenen Stickstoffheteroatomen Alkyl-, Dialkylaminoalkyl-, Acylalkyl-, Alkyletheralkyl-, Dialkylamidoalkyl-, Dialkylaminopolyaminoalkyl-, Alkylpolyether- oder Dialkylaminopolyetheralkylreste (vgl. Tabelle II).

Durch gezielte Substitution an den einfach gebundenen Stickstoffheteroatomen können die Wascheigenschaften, ausgehend von der jeweiligen Grundstruktur, so verändert werden, daß sie an spezielle Randbedingungen des Waschprozesses optimal angepaßt sind. Derartige Randbedingungen sind beispielweise vorgegeben durch die Zusammensetzung des zu behandelnden Rohgases, dessen Temperatur, die Weiterverarbeitung der gewonnenen schwefelhaltigen Fraktion, oder beispielsweise die Temperatur der Regenerierung.

Weiterhin lassen sich erfindungsgemäß die Wascheigenschaften durch gezielte Substitutionen an einem oder mehreren Ringkohlenstoffatomen steuern.

Mit Vorteil kann dabei wenigstens ein Wasserstoffligand an einem oder mehreren Ringkohlenstoffatomen durch eine Alkyl-, Dialkylaminoalkyl-, Acylalkyl-, Alkyletheralkyl-, Dialkylamidoalkyl-, Dialkylaminopolyaminoalkyl-, Alkylpolyether- oder Dialkylaminopolyetheralkylgruppe substituiert werden.

Unter den vorgenannten Substituenten nehmen die Aminosubstituenten eine Sonderstellung ein. Diese Liganden an den Stickstoffheteroatomen oder Ringkohlenstoffatomen müssen ausschließlich tertiäre Aminogruppen enthalten, d.h. es darf keine Stickstoff-Wasserstoff-Bindung vorhanden sein (vgl. Tabelle II).

Als besonders vorteilhafte Substituenten erweisen sich hierbei Dialkylaminoalkylgruppen.

Ebenso wie die Stickstoffheteroatome können die Ringkohlenstoffatome gleich oder unterschiedlich substituiert sein.

Als besonders vorteilhaft erweist sich weiterhin, wenigstens eine Methylengruppe im Ring durch eine Ringketongruppe zu ersetzen.

Die folgende Tabelle II zeigt die erfindungsgemäßen Organylsubstituenten (Liganden) für die Stickstoffheteroatome und die Ringkohlenstoffatome.

Tabelle II

| Organyl-Substituenten (Liganden) | Stickstoffheteroatom | Ringkohlenstoffatom |
|---|---|---|
| -Alkyl | $-(CH_2)_m-CH_3$ | $-(CH_2)_m-CH_3$ |
| -Dialkylaminoalkyl | 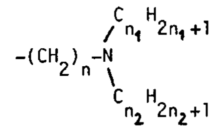 | 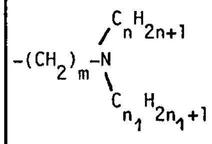 |
| -Acylalkyl | 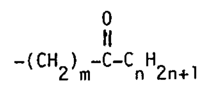 | 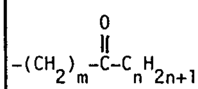 |
| -Alkyletheralkyl | $-(CH_2)_n-O-C_{n_1}H_{2n_1+1}$ | $-(CH_2)_m-O-C_nH_{2n+1}$ |
| -Dialkylamidalkyl | 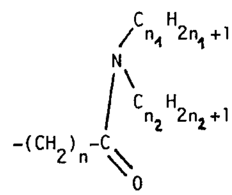 | 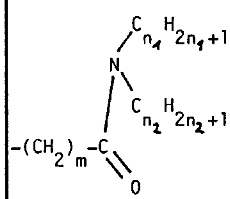 |
| -Dialkylaminopolyaminoalkyl | 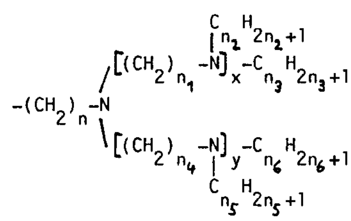 | 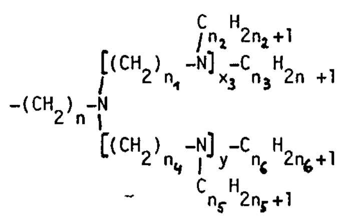 |
| -Alkylpolyether | $-\|(CH_2)_n-O\|_x-(CH_2)_m-CH_3$ | $-(CH_2)_m-O-[(CH_2)_n-O]_x-(CH_2)_m-CH_3$ |
| -Dialkylaminopolyetheralkyl | 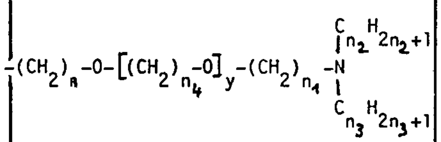 | 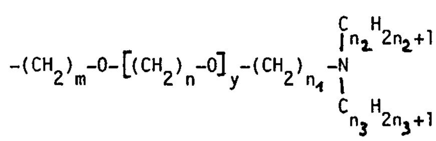 |

$m = (0,\ldots,4)$; $n, n_1 \ldots n_6 = (1,\ldots,4)$;
$x = (2,\ldots,6)$; $y = (0,\ldots,6)$
(Bei den Alkylgruppen werden bei m, n und $n_i (i=1,\ldots,6)$ kleine Werte bevorzugt.)

Alle vorgenannten Grundstrukturen erbringen gegenüber dem Stand der Technik bessere Wascheigenschaften, wobei durch gezielte Substitutionen an den Stickstoffheteroatomen und/oder den Ringkohlenstoffatomen die Wascheigenschaften spezifisch an die Prozeßanforderungen angepaßt werden.

Mit besonderem Vorteil eignen sich folgende Verbindungen im Rahmen der Erfindung als Waschmittel:
1,3-Dimethyl-1,3-Diazinan-2-on

(1,3-Dimethyl-Pyrimidinan-2-on)

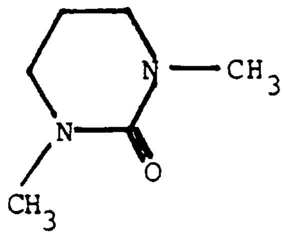

2-Dimethylaminopropyl-1,2-Oxazolidin
(2-Dimethylaminopropyl-Isoxazolidin)

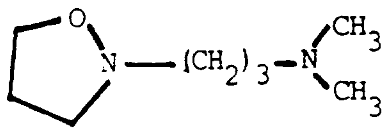

1,2-Diethyl-1,2-Diazinan-3-on
(1,2-Diethyl-Pyridazinan-3-on)

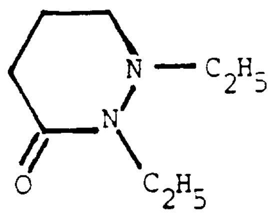

1,2-Dimethyl-1,2-Diazolidin-3-on
(1,2-Dimethyl-Pyrazolidin-3-on)

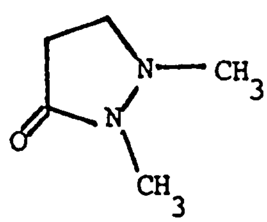

2-Ethyl-1,2-Oxadiazinan-3-on

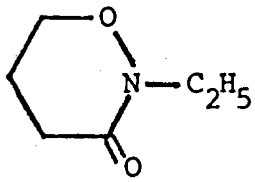

1,2,3-Trimethyl-1,2-Diazolidin-5-on
(1,2,3-Trimethyl-Pyrazolidin-5-on)

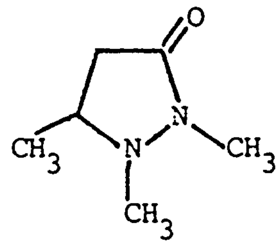

Weitere günstige Waschmittel sind das 1,3-Di-(Dimethylaminoethyl)-1,3-Diazinan-2-on, sowie die unter ihrer allgemeinen Bezeichnung zusammengefaßten Dialkylaminoalkyl-Isoxazolidine und Dialkylaminoalkyl-Isoxazolidinone.

Erfindungsgemäß sind als Waschmittel weiterhin zweikernige Ringsysteme geeignet, wobei wenigstens ein Ring ein erfindungsgemäßer Heterocyclus ist. Zu den erfindungsgemäßen zweikernigen Ringsystemen zählen somit sowohl solche, die einen Carbocyclus und einen erfindungsgemäßen Heterocyclus aufweisen, als auch jene, die aus zwei Heterocyclen zusammengesetzt sind. Dabei kann im Prinzip jeder beliebige Heterocyclus mit einem der erfindungsgemäßen Heterocyclen zu einer Verbindung zusammengesetzt werden. Bevorzugt werden dabei rein heterocyclische Ringsysteme.

In weiterer Ausgestaltung der Erfindung können die zweikernigen Ringsysteme in unterschiedlicher Weise aneinander gebunden sein. So ist vorgesehen, daß ein Ringkohlenstoff- oder Stickstoffheteroatom eines Stickstoffheterocyclus das zweite Ringsystem als Liganden trägt. Ebenso sind heterocyclische Brückensysteme, Stickstoff-Heterospirane sowie kondensierte Ringsysteme zu den erfindungsgemäßen Stoffen zu zählen.

Besonders günstig erweisen sich als Waschmittel zweikernige Ringsysteme, bei welchen die Cyclen über tertiäre Polyalkylaminobrücken verbunden sind.

## Tabelle III

## zweikernige Ringsysteme

A,A̲: erfindungsgemäßer Heterocyclus

B,B̲: Heterocyclus (erfindungsgemäß oder bekannt) oder Carbocyclus

N : Stickstoffheteroatom

C : Ringkohlenstoffatom

zweikerniges Ringsystem ohne gemeinsames Ringatom

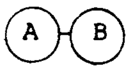


Beispiel: 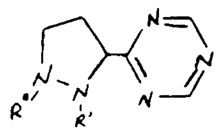

Brückensystem (mit einer Brücke, bestehend aus einer oder mehreren Methylengruppen)

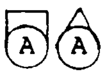


Beispiel: 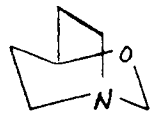

Heterospiran

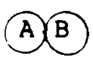


Beispiel: 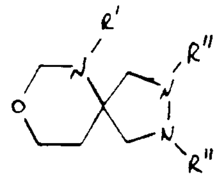

kondensierte Doppelringe

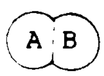


Beispiel: 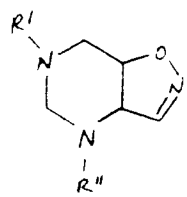

über Polyalkylaminobrücke (PAA) verbundene Ringe

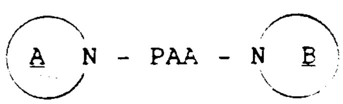


Beispiel: 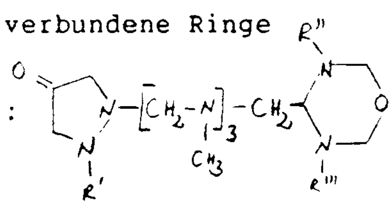

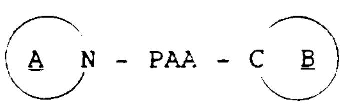


Beispiel: 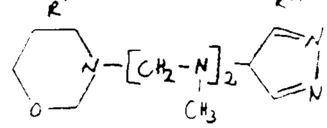

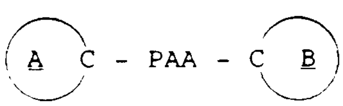


Beispiel: 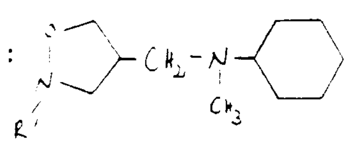

Gemäß einer besonderen Weiterbildung der Erfindung können die erfindungsgemäßen Waschmittel nicht nur als Einzelkomponenten eingesetzt werden, sondern auch in einem physikalisch wirkenden Waschmittelkomposit enthalten sein, in welchem wenigstens eine Komponente die Grundstruktur eines erfindungsgemäßen Heterocyclus aufweist.

Der Einsatz eines Waschmittelkomposits bietet oft den Vorteil, daß die Eigenschaften des zur Anwendung kommenden Waschmittelgemisches speziell auf die jeweiligen spezifischen Trennaufgaben abgestimmt werden können. Weiterhin besteht dadurch die Möglichkeit, jene als Waschmittel klassifizierten Heterocyclen, welche unter den Verfahrensbedingungen in fester oder hochviskoser Form vorliegen, in Lösung für die selektive Entschwefelung mittels physikalischer Wäsche zu verwenden. Hierbei wird die Konzentration der festen heterocyclischen Komponenten so gewählt, daß sie bei den Verfahrensbedingungen stets in Lösung verbleiben.

Die erfindungsgemäßen Waschmittel sind anwendbar in allen physikalischen Wäschen, die auf eine Auswaschung von Schwefelverbindungen, speziell von $H_2S$, abzielen, während $CO_2$ im gewaschenen Produktgas verbleiben kann oder soll, d`h. Waschmittel, welche eine gute Selektivität zwischen Schwefelverbindungen und $CO_2$ besitzen. Ebenso eignen sie sich dazu, schwerer flüchtige Schwefelverbindungen, wie Mercaptane oder $CS_2$ auszuwaschen, wobei dann die Regenerierung des beladenen Waschmittels entsprechend angepaßt werden muß.

Gegenüber den bekannten Waschmitteln ergeben die erfindungsgemäßen Waschmittel verminderte Verbrauchszahlen.

Die auf der Basis der erfindungsgemäßen Grundstrukturen aufgebauten Waschmittel und Waschmittelkomposite enthalten, wie bei physikalischen Waschmitteln üblich, vorzugsweise möglichst wenig Wasser. Der Wasseranteil sollte je nach Waschmittel maximal 5 Gewichtsprozent betragen, bevorzugt werden jedoch 0,1 bis 3 Gewichtsprozent.

Da in den meisten Fällen die von Schwefelkomponenten zu reinigenden Gase Wasser enthalten, wird dieses bei einer Wäsche mit den erfindungsgemäßen Waschmitteln ebenfalls weitgehend entfernt. Eine vorherige, weitgehende Entfernung des Wasseranteils aus dem Rohgas ist daher nicht notwendig. In manchen Fällen ist diese sogar unerwünscht, da das im beladenen Waschmittel mitgelöste Wasser in der Regenerierung als Strippgas wirkt.

Die erfindungsgemäßen Waschmittel sind geeignet, unter Druck stehende, Schwefelkomponenten enthaltende Rohgase zu behandeln, wobei der Druck in der Waschsäule zwischen 10 und 120 bar, mit Vorzug zwischen 15 und 60 bar, liegt.

Um die erfindungsgemäßen Waschmittel hierbei vorteilhaft einsetzen zu können, sollte die Temperatur der Wäsche zwischen 0 °C und 80 °C, bevorzugt zwischen 0 °C und 50 °C, liegen.

Die erfindungsgemäßen Waschmittel können zur Reinigung von Rohgasen mit beliebigem $H_2S$-Gehalt herangezogen werden. Besonders günstig ist, wenn der $H_2S$-Anteil zwischen 0,1 und 10 mol-% beträgt, mit besonderem Vorzug sollte das Rohgas 0,3 bis 5 mol-% $H_2S$ enthalten.

Der Gehalt an $CO_2$ im Rohgas kann ebenfalls beliebige Werte annehmen, vorzugsweise sollte er jedoch zwischen 2 und 25 mol-% liegen.

Unter den genannten Voraussetzungen können mit den erfindungsgemäßen Waschmitteln $H_2S$-Gehalte im gereinigten Produktgas erreicht werden, die im Bereich weniger ppm liegen.

Weiterhin wird die Anwendung der erfindungsgemäßen Waschmittel am Beispiel der Fig. 1 erläutert und für ausgewählte Vertreter der erfindungsgemäßen Verbindungen mit den bekannten Waschmitteln NMP und PGE verglichen. Die Vergleiche sind aus Tabelle IV ersichtlich.

Beispiel

Bei einem Verfahren gemäß Fig. 1 wird ein $H_2S$ enthaltendes Rohgas von 30 bar und 40 °C über Leitung 1 herangeführt und im Wärmetauscher E1 gegen kaltes Produktgas der Leitung 3 auf 20 °C abgekühlt. Dabei auskondensierendes Wasser wird in Abscheider D1 abgetrennt, und über Leitung 2 wird das zu reinigende Rohgas in die Waschsäule T1 eingespeist, wo es in Kontakt mit dem Waschmittel gebracht wird. Vor Eintritt in die Waschkolonne wird das regenerierte Waschmittel in E5 auf 0 °C abgekühlt. Bei diesem Temperaturniveau ist auch gewährleistet, daß innerhalb der Waschkolonne Wasser nicht als Eis fest ausfallen kann. Am Kopf der Waschkolonne T1 wird über Leitung 3 ein Produktgas abgezogen, welches nahezu vollständig von $H_2S$ befreit ist. Das Produktgas wird mit einem spezifizierten Gehalt von 10 ppm $H_2S$ in Wärmetauscher E1 gegen abzukühlendes Rohgas erwärmt und steht zu einer weiteren Verwendung zur Verfügung. Das aus dem Sumpf der Waschsäule T1 mittels Leitung 5 abgezogene beladene Waschmittel enthält neben dem ausgewaschenen $H_2S$ auch andere Komponenten des Rohgases entsprechend deren physikalischen Löslichkeiten im Waschmittel. Diese mitgelösten Gase werden mit Hilfe einer Zwischenentspannung auf 3,3 bar im Abscheider D2 weitgehend aus dem Waschmittel entfernt und über Leitung 6 mit dem auf 3,3 bar verdichteten, hydrierten "Claus-Off-Gas" vermischt und nach weiteren Kompressionen in C2 auf 10 bar bzw. C3 auf 30 bar mittels Leitung 14 dem Rohgas zugeführt.

Das verbleibende beladene Waschmittel wird über Leitung 7 abgezogen und auf 1,5 bar entspannt, wobei bereits ein Teil des $H_2S$ sowie die Hauptmenge an noch gelöstem $CO_2$ ausgast und in Abscheider D3 gasförmig abgetrennt wird.

Das noch schwach mit $H_2S$ beladene Waschmittel wird im Wärmetauscher E6 mit regeneriertem Waschmittel und in E7 mit Dampf auf 115 °C angewärmt und einem oberen Bereich der Regeneriersäule T2 zugespeist. In der Regeneriersäule T2 wird mit Stickstoff das restliche gelöste $CO_2$ und $H_2S$ abgestrippt, so daß am Sumpf der Regenerierkolonne über Leitung 4 von den gelösten Komponenten befreites Waschmittel abgezogen und zur erneuten Auswaschung in die Waschkolonne T1 zurückgeführt werden kann. Das am Kopf der Regenerierkolonne T2 abgezogene Sauergas wird mit dem aus dem Abscheider D3 kommenden Flashgas der Leitung 9 vermischt und im Wärmetauscher E8 auf 0 °C abgekühlt, wobei die Hauptmenge des Waschmitteldampfes auskondensiert. Im anschließenden Abscheider D4 wird das Kondensat abgezogen und dem beladenen Waschmittel vor dem Abscheider D3 zugemischt. Das von waschmittelanteilen befreite Sauergas der Leitung 12 wird in eine Clausanlage C geleitet, wo unter Zugabe von Sauerstoff elementarer Schwefel erzeugt wird. Das hydrierte "Claus-Off-Gas" aus Leitung 13, welches noch Schwefelanteile enthält, wird nach Verdichtung in C1 und Abkühlung in E10 dem Flashgas der Leitung 6 zugespeist.

Die folgende Tabelle IV zeigt anhand ausgewählter Vertreter der erfindungsgemäßen Waschmittel deren Effizienz im Vergleich zu bekannten Waschmitteln.

## Tabelle IV

**Rohgas:** 1000 mol/s; p = 30 bar; T = 40°C

| | |
|---|---|
| $H_2$ | 36 mol% |
| CO | 47 mol% |
| $CO_2$ | 16 mol% |
| $H_2S$ | 1 mol% |

**Produktspezifikation:** 10 ppm $H_2S$ in Produktgas (Leitung 3)

| | DMDAO | DAPIO | DEPAO | DMPLO | NMP | PGE |
|---|---|---|---|---|---|---|
| Waschmittelumlauf (kg/s) | 24 | 24 | 23 | 23 | 25 | 37 |
| Strippgasbedarf (mol/s) | 16 | 18 | 17 | 18 | 20 | 10 |
| S-Konzentration Clausfraktion (Mol-%) | 29.9 | 26.1 | 27.8 | 25.4 | 24.5 | 27.3 |
| T (Sumpf $T_1$) (°C) | 20 | 19 | 18 | 21 | 20 | 15 |
| **Verbrauchszahlen** | | | | | | |
| 1. elektr. Leistungen (kW elektrisch) | | | | | | |
| Pumpen | 96 | 98 | 96 | 94 | 100 | 150 |
| Kompressoren | 492 | 578 | 531 | 551 | 649 | 607 |
| Fremdkälte | 213 | 226 | 228 | 223 | 224 | 303 |
| gesamt | 801 | 882 | 855 | 868 | 973 | 1060 |
| 2. Dampfbedarf E7 (kW thermisch) | 599 | 738 | 711 | 689 | 764 | 831 |

DMDAO: 1,3-Dimethyl-1,3-Diazinan-2-on

DAPIO: 2-Dimethylaminopropyl-Isoxazolidin

DEPAO: 1,2-Diethyl-Pyridazinan-3-on

DMPLO: 1,2-Dimethyl-Pyrazolidin-3-on

NMP : N-Methyl-Pyrrolidon-2

PGE : Polyethylenglycoldialkylether

## Patentansprüche

1. Verfahren zur selektiven Entfernung anorganischer und/oder organischer Schwefelverbindungen wie $H_2S$, COS, $CS_2$, Mercaptanen und dergleichen aus Gasen, die wenigstens eine weitere der Komponen-

ten $H_2$, $N_2$, Ar, $CO_2$, CO und aliphatische Kohlenwasserstoffe enthalten, durch Wäsche mit einem physikalisch wirkenden Waschmittel, dadurch gekennzeichnet, daß als Waschmittel eine Verbindung eingesetzt wird, deren Grundstruktur ausgewählt ist aus den Heterocyclen mit einer Gliederzahl n größer/gleich 5 mit zwei Heteroatomen, ausgewählt aus Stickstoff und Sauerstoff, wovon wenigstens ein Heteroatom Stickstoff ist und wobei das oder die Stickstoffatome doppelt gebunden oder einfach gebunden und organylsubstituiert sind und wobei die Heteroatome bei Ringen gerader Gliederzahl eine der Stellungen von 1,2 bis 1,n/2 und bei Ringen ungerader Gliederzahl eine der Stellungen von 1,2 bis 1,(n-1)/2 einnehmen.

**2.** Verfahren nach Anspruch 1, dadurch gekennzeichnet, daß die Grundstruktur ein fünfgliedriger Heterocyclus ist.

**3.** Verfahren nach Anspruch 1, dadurch gekennzeichnet, daß die Grundstruktur ein sechsgliedriger Heterocyclus ist.

**4.** Verfahren nach einem der Ansprüche 1 bis 3, dadurch gekennzeichnet, daß beide Heteroatome Stickstoff sind.

**5.** Verfahren nach einem der Ansprüche 1 bis 3, dadurch gekennzeichnet, daß die Heteroatome Stickstoff und Sauerstoff sind.

**6.** Verfahren nach einem der Ansprüche 1 bis 4, dadurch gekennzeichnet, daß die Grundstruktur des Waschmittels ausgewählt ist aus einer der Familien der Pyrazole, Pyrazolidine, Pyridazine, Pyridazinane, Pyrimidine oder Pyrimidinane.

**7.** Verfahren nach einem der Ansprüche 1 bis 3 und 5, dadurch gekennzeichnet, daß die Grundstruktur des Waschmittels ausgewählt ist aus einer der Familien der Isoxazole, Isoxazolidine, 1,2-Oxazine, 1,2-Oxazinane, 1,3-Oxazine oder 1,3-Oxazinane.

**8.** Verfahren nach einem der Ansprüche 1 bis 7, dadurch gekennzeichnet, daß die Organylsubstituenten an den einfach gebundenen Stickstoffheteroatomen aus Alkyl-, Dialkylaminoalkyl-, Acylalkyl-, Alkyletheralkyl-, Dialkylamidoalkyl-, Dialkylaminopolyaminoalkyl-, Alkylpolyether- oder Dialkylaminopolyetheralkylgruppen ausgewählt sind.

**9.** Verfahren nach einem der Ansprüche 1 bis 8, dadurch gekennzeichnet, daß wenigstens eine Ringmethylengruppe durch eine Ringketongruppe ersetzt ist.

**10.** Verfahren nach einem der Ansprüche 1 bis 9, dadurch gekennzeichnet, daß wenigstens ein Wasserstoffatom an einem oder mehreren Ringkohlenstoffatomen durch eine Alkyl-, Dialkylaminoalkyl-, Acylalkyl-, Alkyletheralkyl-, Dialkylamidoalkyl-, Dialkylaminopolyaminoalkyl-, Alkylpolyether- oder Dialkylaminopolyetheralkylgruppe substituiert ist.

**11.** Verfahren nach einem der Ansprüche 1 bis 10, dadurch gekennzeichnet, daß das Waschmittel bei einem Waschsäulendruck zwischen 10 und 120 bar, bevorzugt zwischen 15 und 60 bar, eingesetzt wird.

**12.** Verfahren nach einem der Ansprüche 1 bis 11, dadurch gekennzeichnet, daß das Waschmittel bei einer Waschtemperatur zwischen 0 °C und 80 °C, bevorzugt zwischen 0 °C und 50 °C, eingesetzt wird.

**13.** Verfahren nach einem der Ansprüche 1 bis 12, dadurch gekennzeichnet, daß mit dem Waschmittel Rohgase mit einem $H_2S$-Gehalt von 0,1 bis 10 mol%, bevorzugt 0,3 bis 5 mol%, gewaschen werden.

**14.** Verfahren nach einem der Ansprüche 1 bis 13, dadurch gekennzeichnet, daß der $H_2O$-Gehalt im Waschmittel bis zu 5 Gew-%, bevorzugt zwischen 0,1 und 3 Gew-%, beträgt.

**15.** Verfahren nach einem der Ansprüche 1 bis 14, dadurch gekennzeichnet, daß als Waschmittel 1,3-Dimethyl-1,3-Diazinan-2-on und/oder 2-Dimethylaminopropyl-1,2-Oxazolidin und/oder 1,2-Diethyl-1,2-Diazinan-3-on und/oder 1,2-Dimethyl-1,2-Diazolidin-3-on und/oder 2-Ethyl-1,2-Oxadiazinan-3-on

und/oder 1,2,3-Trimethyl-1,2-Diazolidin-5-on und/oder 1,3-Di-(Dimethylaminoethyl)-1,3-Diazinan-2-on eingesetzt wird.

**16.** Verfahren nach einem der Ansprüche 1 bis 14, dadurch gekennzeichnet, daß als Waschmittel zweikernige Ringsysteme eingesetzt werden, wobei wenigstens einer der Ringe einer der in den vorangehenden Ansprüchen genannten Heterocyclen ist.

**17.** Verfahren nach einem der Ansprüche 1 bis 14, dadurch gekennzeichnet, daß als Waschmittel über Polyalkylaminobrücken verbundene Ringe eingesetzt werden, wobei wenigstens einer der Ringe einer der in den vorangehenden Ansprüchen genannten Heterocyclen ist.

**18.** Verfahren nach einem der Ansprüche 1 bis 17, dadurch gekennzeichnet, daß ein physikalisch wirkendes Waschmittelkomposit eingesetzt wird, in welchem wenigstens eine Häuptkomponente die Grundstruktur eines der in den vorangehenden Ansprüchen genannten Heterocyclen aufweist.

## Claims

**1.** Process for selective removal of inorganic and/or organic sulphur compounds such as $H_2S$, COS, $CS_2$, mercaptanes and the like from gases which contain at least one other of the compounds $H_2$, $N_2$, Ar, $Co_2$, CO and aliphatic hydrocarbons, by washing with a physically acting washing agent, characterised in that a compound is used as washing agent the basic structure of which is selected from the heterocycles with a number of members n greater than/equal to 5 with two heteroatoms, selected from nitrogen and oxygen, of which at least one heteroatom is nitrogen and in which the nitrogen atom or atoms are double-bonded or single-bonded and organyl-substituted and in which the heteroatoms adopt one of the positions from 1,2 to 1,n/2 in rings with an even number of members and one of the positions from 1,2 to 1,(n-1)/2 in rings with an odd number of members.

**2.** Process according to claim 1, characterized in that the basic structure is a five-member heterocycle.

**3.** Process according to claim 1, characterized in that the basic structure is a six-member heterocycle.

**4.** Process according to one of claims 1 to 3, characterized in that both heteroatoms are nitrogen.

**5.** Process according to one of claims 1 to 3, characterized in that the heteroatoms are nitrogen and oxygen.

**6.** Process according to one of claims 1 to 4, characterized in that the basic structure of the washing agent is selected from one of the families of the pyrazoles, pyrazolidines, pyridazines, pyridazinanes, pyrimidinez or pyrimidinanez.

**7.** Process according to one of claims 1 to 3 and 5, characterized in that the basic structure of the washing agent is selected from one of the families of the isoxazoles, isoxazolidines, 1,2-oxazines, 1,2-oxazinanez, 1,3-oxazinez or 1,3-oxazinanes.

**8.** Process according to one of claims 1 to 7, characterized in that the organyl substituents on the single-bonded nitrogen heteroatoms are selected from alkyl, dialkylaminoalkyl, acylalkyl, alkyletheralkyl, dialkylamidoalkyl, dialkylaminopolyaminoalkyl, alkylpolyether or dialkylaminopolyetheralkyl groups.

**9.** Process according to one of claims 1 to 8, characterised in that at least one cyclic methylene group is replaced by a cyclic ketone group.

**10.** Process according to one of claims 1 to 9, characterised in that at least one hydrogen atom on one or more cyclic carbon atoms is substituted by an alkyl, dialkylaminoalkyl, acylalkyl, alkyletheralkyl, dialkylamidoalkyl, dialkylaminopolyaminoalkyl, alkylpolyether or dialkylaminopolyetheralkyl group.

**11.** Process according to one of claims 1 to 10, characterised in that the washing agent is used at a washing column pressure of between 10 and 120 bar, preferably between 15 and 60 bar.

12. Process according to one of claims 1 to 11, characterised in that the washing agent is used at a washing temperature of between 0 °C and 80 °C, preferably between 0 °C and 50 °C.

13. Process according to one of claims 1 to 12, characterised in that untreated gases with an $H_2S$ content from 0.1 to 10 mol%, preferably 0.3 to 5 mol%, are washed with the washing agent.

14. Process according to one of claims 1 to 13, characterised in that the $H_2O$ content in the washing agent is up to 5% by weight, preferably between 0.1 and 3% by weight.

15. Process according to one of claims 1 to 14, characterised in that 1,3-dimethyl-1,3-diazinane-2-one and/or 2-dimethylaminopropyl-1,2-oxazolidine and/or 1,2-diethyl-1,2-diazinane-3-one and/or 1,2-dimethyl-1,2-diazolidine-3-one and/or 2-ethyl-1,2-oxadiazinane-3-one and/or 1,2,3-trimethyl-1,2-diazolidine-5-one and/or 1,3-di-(dimethylaminoethyl)-1,3-diazinane-2-one is used as washing agent.

16. Process according to one of claims 1 to 14, characterised in that binuclear ring systems are used as washing agent, in which at least one of the rings is one of the heterocycles named in the preceding claims.

17. Process according to one of claims 1 to 14, characterised in that rings linked by means of polyalkylamino bridges are used as washing agent, in which at least one of the rings is one of the heterocycles named in the preceding claims.

18. Process according to one of claims 1 to 17, characterised in that a physically acting washing agent composite is used, in which at least one main component exhibits the basic structure of one of the heterocycles named in the preceding claims.

**Revendications**

1. Procédé pour séparer de façon sélective des composés inorganiques et/ou organiques soufrés, tels $H_2S$, COS, $CS_2$, mercaptans et similaires, d'un gaz contenant en outre au moins un constituant formé de $H_2$, $N_2$, Ar, $CO_2$, CO ou d'hydrocarbures aliphatiques, par lavage à l'aide d'un agent de lavage à action physique caractérisé en ce que, en tant qu'agent de lavage, est employé un composé dont la structure de base est choisie parmi les hétérocycles dont le nombre d'atomes est égal ou supérieur à 5 et comportant deux hétéroatomes, dont au moins l'un est un atome d'azote, et où ce ou ces atomes d'azote sont reliés par une double liaison ou une simple liaison et substitués par un groupe organyle, lesdits hétéroatomes dans les cycles à nombre d'atomes pair étant en position comprise entre les positions 1,2 et 1,n/2 et dans les cycles à nombre d'atomes2 impair étant en position comprise entre les positions 1,2 et 1,(n-1)/2.

2. Procédé selon la revendication 1, caractérisé en ce que la structure de base est un hétérocycle à 5 atomes.

3. Procédé selon la revendication 1, caractérisé en ce que la structure de base est un hétérocycle à 6 atomes.

4. Procédé selon l'une quelconque des revendications 1 à 3, caractérisé en ce que les deux hétéroatomes sont des atomes d'azote.

5. Procédé selon l'une quelconque des revendications 1 à 3, caractérisé en ce que les hétéroatomes sont un atome d'azote et un atome d'oxygène.

6. Procédé selon l'une quelconque des revendications 1 à 4, caractérisé en ce que la structure de base des agents de lavage est choisie dans la famille des pyrazole, pyrazolidine, pyridazine, pyridazinane, pyrimidine ou pyrimidinane.

7. Procédé selon l'une quelconque des revendications 1 à 3 et 5, caractérisé en ce que la structure de base de l'agent de lavage est choisie dans la famille des isoxazole, isoxazolidine, 1,2-oxazine, 1,2-oxazinane, 1,3-oxazine et 1,3-oxazinane.

**8.** Procédé selon l'une quelconque des revendications 1 à 7, caractérisé en ce que les substituants organyle liés à l'atome d'azote à simple liaison sont sélectionnés parmi des radicaux alkyl-, dialkylaminoalkyl, acylalkyl-, alkylétheralkyl-, dialkylamidoalkyl, dialkylaminopolyaminoalkyl, alkylpolyéther ou dialkylaminopolyétheralkyle.

**9.** Procédé selon l'une quelconque des revendications 1 à 8, caractérisé en ce que au moins un des groupes méthylène du cycle est remplacé par un groupe cétone du cycle.

**10.** Procédé selon l'une quelconque des revendications 1 à 9, caractérisé en ce que au moins un des atomes d'hydrogène qui est lié à un ou plusieurs des atomes de carbone du cycle est substitué par un radical alkyl-, dialkylaminoalkyl-, acylalkyl-, alkylétheralkyl-, dialkylamidoalkyl-, dialkylaminopolyaminoalkyl, alkylpolyétherou dialkylaminopolyétheralkyl.

**11.** Procédé selon l'une quelconque des revendications 1 à 10, caractérisé en ce que l'agent de lavage est introduit dans une colonne de lavage se trouvant sous une pression comprise entre 10 et 120 bars, de préférence entre 15 et 60 bars.

**12.** Procédé selon l'une quelconque des revendications 1 à 11, caractérisé en ce que l'agent de lavage est employé à une température de lavage comprise entre 0° et 80°C, de préférence entre 0 et 50°C.

**13.** Procédé selon l'une quelconque des revendications 1 à 12, caractérisé en ce que les gaz bruts qui sont lavés à l'aide de l'agent de lavage ont une teneur en $H_2S$ comprise entre 0,1 et 10% molaire, de préférence 0,3 et 5% molaire.

**14.** Procédé selon l'une quelconque des revendications 1 à 13, caractérisé en ce que la teneur en $H_2O$ des agents de lavage peut atteindre 5% en poids, et de préférence est comprise entre 0,1 et 3% en poids.

**15.** Procédé selon l'une quelconque des revendications 1 à 14, caractérisé en ce que, en tant qu'agent de lavage, on utilise un des composés de la liste suivante: 1,3-diméthyl-1,3-diazinane-2-one et/ou 2-diméthylaminopropyl-1,2-oxazolidine et/ou 1,2-diéthyl-1,2-diazinane-3-one et/ou 1,2-diméthyl-1,2-diazolidine-3-one et/ou 2-éthyl-1,2-oxadiazinane-3-one et/ou 1,2,3-triméthyl-1,2-diazolidine-5-one et/ou 1,3-di-(diméthylaminoéthyl)-1,3-diazinane-2-one.

**16.** Procédé selon l'une quelconque des revendications 1 à 14, caractérisé en ce qu'en tant qu'agent de lavage sont utilisés des composés cycliques comportant deux noyaux, dont l'un au moins est un des hétérocycles cités dans les revendications précédentes.

**17.** Procédé selon l'une quelconque des revendications 1 à 14, caractérisé en ce qu'en tant qu'agent de lavage on utilise des cycles liés par des ponts polyalkylamino dans lesquels au moins un des cycles est un des hétérocycles cités dans les revendications précédentes.

**18.** Procédé selon l'une quelconque des revendications 1 à 17, caractérisé en ce que l'on emploie un agent composite de lavage à action physique, dont un au moins des constituants principaux présente la structure de base de un des hétérocycles cités dans les revendications précédentes.

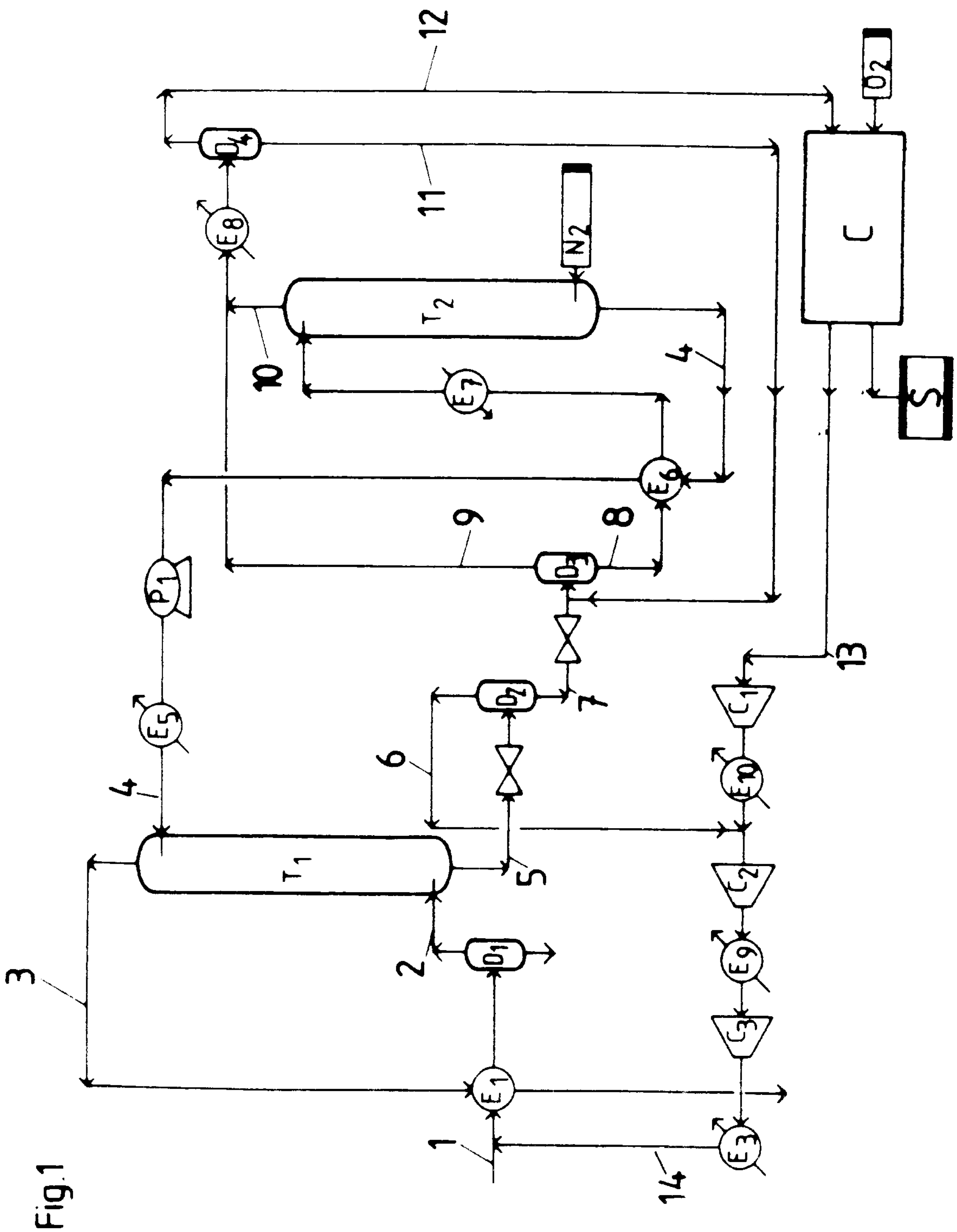


Fig.1